# EUROPÄISCHE PATENTSCHRIFT

(11) **EP 2 029 891 B1**
(45) Veröffentlichungstag und Bekanntmachung des Hinweises auf die Patenterteilung: **05.03.2014**
(21) Anmeldenummer: 07727650.9
(22) Anmeldetag: 02.04.2007
(51) Int. Cl.: F04B 1/04

(54) **KOLBENPUMPE**
PISTON PUMP
POMPE À PISTON

(30) Priorität: 26.05.2006 DE 102006025027
(43) Veröffentlichungstag der Anmeldung: 04.03.2009
(73) Patentinhaber: Robert Bosch GmbH, 70442 Stuttgart (DE)
(72) Erfinder: SCHEPP, Rene, 71336 Waiblingen (DE); ALAZE, Norbert, 71706 Markgroeningen (DE); BELING, Horst, 74074 Heilbronn (DE)
(86) Internationale Anmeldenummer: PCT/EP2007/053178
(87) Internationale Veröffentlichungsnummer: WO 2007/137892

(56) Entgegenhaltungen:
- WO-A-2006/013142
- DE-A1- 10 244 374
- FR-A- 2 627 834
- GB-A- 2 117 086

## Beschreibung

### Stand der Technik

Die vorliegende Erfindung betrifft eine Kolbenpumpe zur Förderung eines Fluids mit einer verbesserten Haltevorrichtung zum Halten eines Einlassventils.

Aus der internationalen Patentanmeldung WO 2006/013 142 A ist eine Kolbenpumpe für Fahrzeugbremsanlagen bekannt, die als Radialkolbenpumpe ausgebindet ist.Ein Kolben der bekannten Kolbenpumpe ist mittels eines Exzenters hinund herbewegbar. Die bekannte Kolbenpumpe weist einen zwischen einem Eingangs- und einen Ausgangsventil angeordneten Arbeits- bzw. Druckraum auf, in welchem durch die Bewegung des Kolbens ein Druck aufgebaut wird. Dieser Druckraum muss an seinem kolbenseitigen Ende gegen einen Niederdruckbereich des Kolbens abgedichtet werden.. Dazu weist die bekannte Kolbenpumpe eine Haltevorrichtung in Form eines Haltekäfigs mit vier sich axial erstreckenden Armen, die abgewinkelt sind und einander als Boden kreuzen, auf. Das Eingangsventil ist in dem Käfig der Haltervorrichtung aufgenommen, eine Einlassventilfeder stützt sich an den abgewinkelten, einander kreuzenden Armen ab. An ihren anderen Enden sind die Arme einstückig mit einem geschlossenen Ring, der einen Dichtbereich der Haltevorrichtung bildet. Mit dem Dichtbereich ist die Haltevorrichtung auf ein druckraumseitiges Ende des Kolbens aufgesetzt und dichtet an einer Zylinderwand und am Kolben ab.

### Vorteile der Erfindung

Die erfindungsgemäße Kolbenpumpe mit den Merkmalen des Patentanspruches 1 weist den Vorteil auf, dass sie besonders einfach aufgebaut ist und kostengünstig bereitgestellt werden kann. Ferner kann die erfindungsgemäße Kolbenpumpe schnell und einfach montiert werden. Dies wird erfindungsgemäß dadurch erreicht, dass die Kolbenpumpe ein Einlassventil aufweist, welches am Kolben angeordnet ist. Das Einlassventil umfasst ein Schließelement, ein Federelement zur Rückstellung des Schließelements und eine Haltevorrichtung. Die Haltevorrichtung ist vorzugsweise käfigförmig ausgebildet und umfasst einen Aufnahmebereich zur Aufnahme und Abstützung des Federelements sowie einen integral gebildeten Dichtbereich. Der Dichtbereich stellt eine Abdichtung eines Druckraums gegenüber einem Niederdruckbereich der Pumpe sicher. Der Dichtbereich ist dabei ringförmig gebildet und weist eine Trennstelle auf. Um eine besonders kostengünstige Herstellung der Haltevorrichtung des Einlassventils zu ermöglichen, ist die Haltevorrichtung ein Kunststoffspritzteil. Mit anderen Worten ist der Dichtbereich in Form eines offenen Rings gebildet, welcher besonders schnell und einfach zu montieren ist. Dabei ist der Dichtbereich einstückig mit dem Aufnahmebereich für das Federelement des Einlassventils gebildet, so dass die Teilezahl reduziert werden kann. Die erfindungsgemäße Ausgestaltung stellt somit insbesondere bei der Montage große Vorteile bereit, da die Montage des Einlassventils an den Kolben nun einfach und mit wenigen Handgriffen durchgeführt werden kann. Im Stand der Technik ergaben sich aufgrund der Vielzahl von Einzelteilen und insbesondere der Federkraft des Federelements des Einlassventils immer Schwierigkeiten bei der Montage bzw. das Federelement machte die Verwendung von Montagehilfsmitteln notwendig. Auf derartige Montagehilfsmittel kann bei der vorliegenden Erfindung verzichtet werden.

Die Unteransprüche zeigen bevorzugte Weiterbildungen der Erfindung.

Besonders bevorzugt weist der Dichtbereich der Haltevorrichtung an seinem inneren Umfang Abstandselemente auf. Dadurch kann eine verbesserte Abdichtung erreicht werden, da das im Druckraum befindliche, unter Druck stehende Fluid sowohl in Axialrichtung als auch in Radialrichtung gegen den Dichtbereich wirken kann.

Die Abstandselemente am Dichtbereich sind vorzugsweise in Axialrichtung der Kolbenpumpe angeordnete Rippen, welche sich im montierten Zustand am Kolben abstützen. Die Rippen sind dabei vorzugsweise gleich ausgebildet und in gleichem Abstand zueinander entlang des inneren Umfangs angeordnet.

Weiter bevorzugt ist der Dichtbereich der Haltevorrichtung auch als Führungselement des Kolbens ausgebildet. Dadurch weist der Dichtbereich neben der Dichtfunktion noch eine zusätzliche Funktion des Führens des Kolbens auf. Dies ergibt den großen Vorteil, dass zusätzliche Führungsringe am Kolben nicht mehr notwendig sind. Somit können hierdurch einerseits Montagekosten und andererseits auch Herstellungskosten der Kolbenpumpe signifikant reduziert werden.

Weiter bevorzugt weist der Dichtbereich der Haltevorrichtung an der Trennstelle einen ersten Endbereich und einen zweiten Endbereich auf. Der erste und der zweite Endbereich sind dabei derart gebildet, dass sie sich in Umfangsrichtung des Dichtbereichs überlappen.

Gemäß einer weiteren bevorzugten Ausgestaltung der Erfindung überlappen sich der erste und der zweite Endbereich des Dichtbereichs in Radialrichtung und/oder Axialrichtung. Durch die Überlappung in Radialrichtung und/oder in Axialrichtung kann eine verbesserte Abdichtung der Trennstelle erreicht werden, da das im Druckraum unter Druck stehende Fluid zur Abdichtung auf den Dichtbereich in Axial- und/oder Radialrichtung wirken kann.

Weiter bevorzugt umfasst der Kolben an seinem druckraumseitigen Ende, an welchem das Einlassventil angeordnet ist, eine ringförmige Ausnehmung zur Aufnahme des Dichtbereichs der Haltevorrichtung. Die ringförmige Ausnehmung ist vorzugsweise als Stufe am Ende des Kolbens ausgebildet.

### Zeichnung

Nachfolgend wird ein bevorzugtes Ausführungsbeispiel der Erfindung unter Bezugnahme auf die begleitende Zeichnung beschrieben. In der Zeichnung ist:
- Figur 1: eine schematische Schnittansicht einer Kolbenpumpe gemäß einem Ausführungsbeispiel der Erfindung,
- Figur 2: eine perspektivische Ansicht einer in Figur 1 gezeigten Haltevorrichtung des Einlassventils und
- Figur 3: eine perspektivische Teilansicht der in Figur 2 gezeigten Halteeinrichtung.

### Ausführungsformen der Erfindung

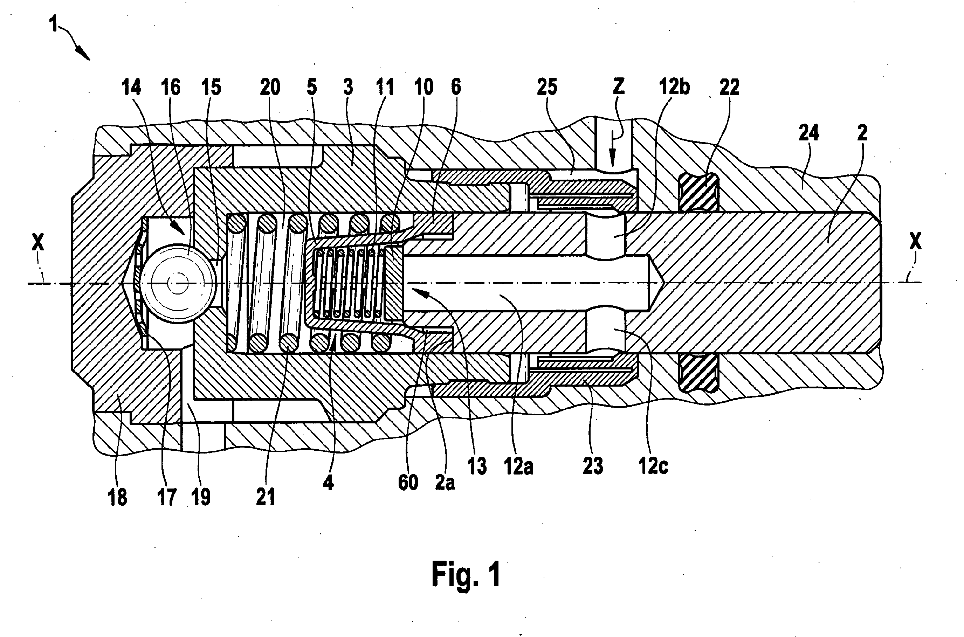

Nachfolgend wird unter Bezugnahme auf die Figuren 1 bis 3 ein bevorzugtes Ausführungsbeispiel einer erfindungsgemäßen Kolbenpumpe 1 beschrieben.

Figur 1 zeigt schematisch im Schnitt den Aufbau der Kolbenpumpe 1. Die Kolbenpumpe 1 umfasst einen Kolben 2, welcher in Axialrichtung X-X beispielsweise mittels eines Exzenters hin- und herbewegbar ist. Der Kolben 2 ist dabei in einem Zylinderelement 3 angeordnet. Im Inneren des Zylinderelements 3 ist ein Druckraum 20 vorgesehen, welcher zwischen einem Einlassventil 13 und einem Auslassventil 14 angeordnet ist. Wie aus Figur 1 ersichtlich ist, ist das Einlassventil 13 im Inneren des Druckraums 20 am druckraumseitigen Ende des Kolbens 2 angeordnet. Das Auslassventil 14 ist als Rückschlagventil ausgebildet, welches eine Durchgangsöffnung 15 freigibt bzw. verschließt. Das Auslassventil 14 umfasst eine Kugel 16 und eine Membranfeder 17, die sich an einem Verschlusselement 18 abstützt. Das Verschlusselement 18 verschließt eine im Gehäuse 24 der Kolbenpumpe vorgesehene Stufenbohrung.

Das Einlassventil 13 umfasst ein Schließelement 10 in Form einer scheibenförmigen Platte, eine Einlassventilfeder 11 und eine Haltevorrichtung 4.

Eine Zuführung eines Fluids zum Druckraum 20 erfolgt, wie aus Figur 1 ersichtlich ist, durch im Kolben 2 vorgesehene Bohrungen 12a, 12b und 12c. Das Hydraulikfluid wird in Richtung des Pfeils Z aus einer Zuleitung durch einen Filter 23 in die Querbohrungen 12b und 12c zugeführt und über die Längsbohrung 12a bei geöffnetem Einlassventil 13 in den Druckraum 20 zugeführt. Im Gehäuse 24 ist ferner noch eine exzenterseitige Abdichtung 22 am Kolben 2 angeordnet.

Im Druckraum 20 ist weiterhin eine zylindrische Schraubenfeder 21 angeordnet, die eine Rückstellkraft zur Rückstellung des Kolbens 2 bereitstellt. Ferner stellt die Schraubenfeder 21 sicher, dass der Kolben stets am Exzenter anliegt. Dem Auslassventil 14 ist eine Druckleitung 19 hydraulisch nachgeschaltet, welche das unter Druck stehende Fluid beispielsweise Radbremszylindern einer Bremsanlage eines Fahrzeugs zuführt.

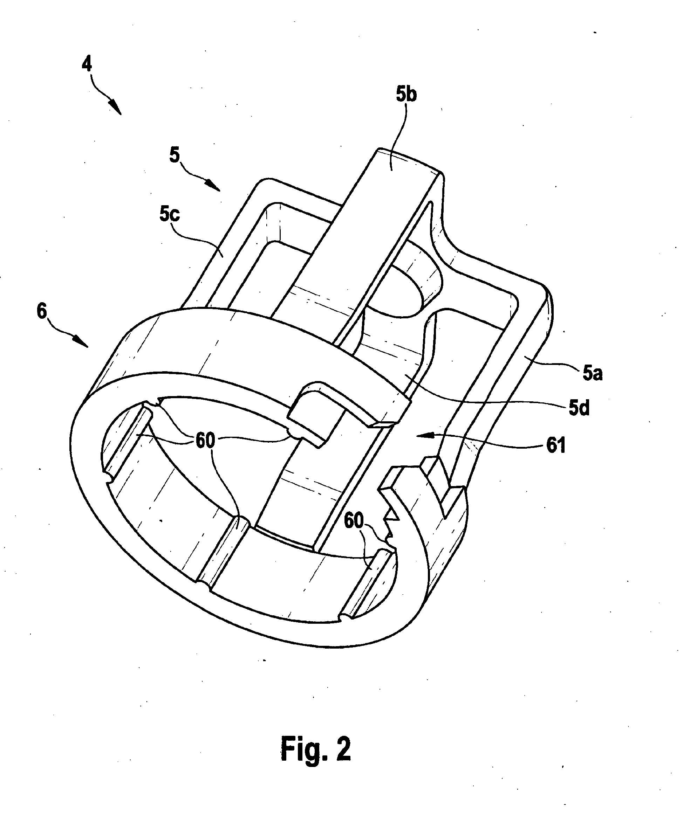

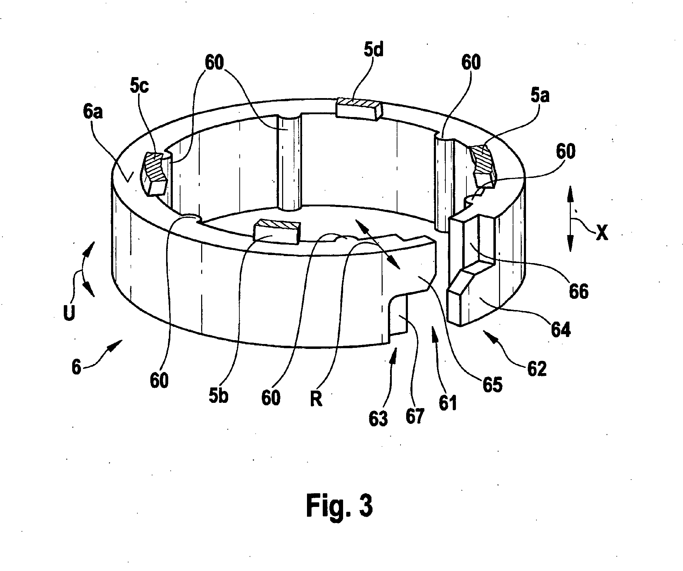

Die Haltevorrichtung 4 des Einlassventils 13 ist im Detail in den Figuren 2 und 3 dargestellt. Die Haltevorrichtung 4 umfasst einen Aufnahmebereich 5 zur Aufnahme der Einlassventilfeder 11 und einen Dichtbereich 6 zur Abdichtung des Druckraums 20 gegenüber dem Niederdruckbereich 25 der Kolbenpumpe im Bereich der Fluidzuführung. Der Aufnahmebereich 5 weist im Wesentlichen eine topfförmige, käfigartige Form auf. Wie aus Figur 2 ersichtlich ist, umfasst der Äufnahmebereich 5 vier balkenartige Elemente 5a, 5b, 5c und 5d, welche einen Käfig für die Einlassventilfeder 11 bilden. Die Einlassventilfeder 11 stützt sich dabei an dem kreuzartig gebildeten Bodenbereich des Aufnahmebereichs 5 ab. Zur Bildung des Bodenbereichs sind die balkenartigen Elemente 5a, 5b, 5c und 5d dabei um ca. 90° abgewinkelt. Ferner weisen die vier balkenartigen Elemente 5a, 5b, 5c und 5d in Axialrichtung in Richtung des Dichtbereichs 6 einen leicht nach außen abgewinkelten Abschnitt auf. Die Haltevorrichtung 4 ist vorzugsweise ein Spritzgussteil, so dass der Aufnahmebereich 5 und der Dichtbereich 6 einstückig gebildet sind.

Wie aus den Figuren 2 und 3 ersichtlich ist, sind am inneren Umfang des Dichtbereichs 6 eine Vielzahl von Abstandselementen in Form von axialen Rippen 60 gebildet. In diesem Ausführungsbeispiels sind genau sechs Rippen 60 vorgesehen. Die Rippen 60 stützen sich im montierten Zustand, wie aus Figur 1 ersichtlich ist, an einem ringförmigen Absatz 2a des Kolbens 2 am druckraumseitigen Ende des Kolbens 2 ab. Der Dichtbereich 6 umfasst ferner eine Trennstelle 61, so dass der Dichtbereich 6 als offener Ring gebildet ist. Die Trennstelle 61 ist im montierten Zustand selbstverständlich geschlossen. An der Trennstelle 61 weist der Dichtbereich 6 somit einen ersten Ringendbereich 62 und einen zweiten Ringendbereich 63 auf. Die Ringendbereiche 62, 63 weisen jeweils eine vorstehende Lasche 64 bzw. 65 und eine Ausnehmung 66 bzw. 67 auf. Die beiden Ringendbereiche 62, 63 sind dabei derart gebildet, dass sie im montierten Zustand einen komplett geschlossenen Ring bilden. Wie insbesondere aus Figur 3 ersichtlich ist, bilden die Laschen 64, 65 und die Ausnehmungen 66, 67 dadurch eine Verbindung der Trennstelle 61, welche Überlappungen in Umfangsrichtung U, in axialer Richtung X und in radialer Richtung R aufweisen. Durch diese Überlappungen kann sichergestellt werden, dass das im Druckraum 20 befindliche, unter Druck stehende Fluid eine zusätzliche Abdichtwirkung sowohl in Axialrichtung als auch in Radialrichtung bereitstellt. Die Rippen 60 stellen dabei sicher, dass unter Druck stehendes Fluid im Druckraum am inneren Umfang des Dichtbereichs 6 anliegt. Ebenfalls liegt unter Druck stehendes Fluid an der zum Druckraum gerichteten ringförmigen Fläche 6a an. Dadurch wird der Dichtbereich 6 durch die Druckkraft im Druckraum 20 gegen den Absatz 2a des Kolbens gedrückt.

Der Dichtbereich 6 weist ferner noch eine Führungsfunktion auf, um den Kolben 2 im Zylinderelement 3 zu führen. Dadurch kann auf zusätzliche separate Führungsringe am Kolben 2 verzichtet werden.

Ferner sei angemerkt, dass durch den als offenen Ring gebildeten Dichtbereich 6 auch eine einfache Vormontage des Einlassventils 13 am druckseitigen Ende des Kolbens 2 durchgeführt werden kann. Somit kann der Kolben 2 mit vormontiertem Einlassventil 13 als vormontierte Baugruppe bereitgestellt werden. Zur Endmontage muss dann der Kolben mitsamt dem Einlassventil 13 lediglich in das Gehäuse 24 der Kolbenpumpe eingeführt werden.

## Patentansprüche

1. Kolbenpumpe zur Förderung eines Fluids, umfassend einen Kolben (2), einen zwischen einem Einlassventil (13) und einem Auslassventil (14) angeordneten Druckraum (20), wobei das Einlassventil (13) ein Schließelement (10), ein Federelement (11) zur Rückstellung des Schließelements (10) und eine Haltevorrichtung (4) umfasst, wobei die Haltevorrichtung (4) einen Aufnahmebereich (5) zur Aufnahme und Abstützung des Federelements (11) und einen integral gebildeten Dichtbereich (6) umfasst, um den Druckraum (20) gegenüber einem Niederdruckbereich der Kolbenpumpe abzudichten, wobei der Dichtbereich (6) ringförmig gebildet ist, **dadurch gekennzeichnet,**
**dass** die Haltevorrichtung (4) ein Kunststoffspritzteil ist und der Dichtbereich (6) eine Trennstelle (61) aufweist.

2. Kolbenpumpe nach Anspruch 1, **dadurch gekennzeichnet, dass** der Dichtbereich (6) der Haltevorrichtung (4) an seinem inneren Umfang Abstandselemente (60) aufweist.

3. Kolbenpumpe nach Anspruch 2, **dadurch gekennzeichnet, dass** die Abstandselemente (60) in Axialrichtung (X-X) der Kolbenpumpe angeordnete Rippen sind, welche sich im montierten Zustand am Kolben (2) abstützen.

4. Kolbenpumpe nach einem der vorhergehenden Ansprüche, **dadurch gekennzeichnet, dass** der Dichtbereich (6) auch als Führungselement des Kolbens ausgebildet ist.

5. Kolbenpumpe nach einem der vorhergehenden Ansprüche, **dadurch gekennzeichnet, dass** der Dichtbereich (6) an der Trennstelle (61) einen ersten Ringendbereich (62) und einen zweiten Ringendbereich (63) aufweist, wobei sich der erste und zweite Ringendbereich (62, 63) in Umfangsrichtung (U) des Dichtbereichs (6) überlappen.

6. Kolbenpumpe nach einem der vorhergehenden Ansprüche, **dadurch gekennzeichnet, dass** sich der erste Ringendbereich (62) und der zweite Ringendbereich (63) in Radialrichtung (R) des Dichtbereichs überlappen.

7. Kolbenpumpe nach einem der vorhergehenden Ansprüche, **dadurch gekennzeichnet, dass** sich der erste Ringendbereich (62) und der zweite Ringendbereich (63) in Axialrichtung (X) des Dichtbereichs (6) überlappen.

8. Kolbenpumpe nach einem der vorhergehenden Ansprüche, **dadurch gekennzeichnet, dass** der Kolben (2) an seinem druckraumseitigen Ende eine ringförmige Ausnehmung (2a) zur Aufnahme des Dichtbereichs (6) der Haltevorrichtung (4) aufweist.

## Claims

1. Piston pump for delivering a fluid, comprising a piston (2), a pressure chamber (20) arranged between an inlet valve (13) and an outlet valve (14), wherein the inlet valve (13) comprises a closing element (10), a spring element (11) for a restoring movement of the closing element (10), and a retention device (4), wherein the retention device (4) comprises a receiving region (5) for receiving and supporting the spring element (11) and comprises an integrally formed sealing region (6) for sealing off the pressure chamber (20) with respect to a low-pressure region of the piston pump, wherein the sealing region (6) is of ring-shaped form, **characterized in that** the retention device (4) is a plastics injection-moulded part, and the sealing region (6) has a parting point (61).

2. Piston pump according to Claim 1, **characterized in that** the sealing region (6) of the retention device (4) has spacer elements (60) on its inner circumference.

3. Piston pump according to Claim 2, **characterized in that** the spacer elements (60) are ribs arranged in the axial direction (X-X) of the piston pump, which ribs are supported on the piston (2) in the assembled state.

4. Piston pump according to one of the preceding claims, **characterized in that** the sealing region (6) is also formed as a guide element for the piston.

5. Piston pump according to one of the preceding claims, **characterized in that** the sealing region (6) has a first ring end region (62) and a second ring end region (63) at the parting point (61), wherein the first and second ring end regions (62, 63) overlap in the circumferential direction (U) of the sealing region (6).

6. Piston pump according to one of the preceding claims, **characterized in that** the first ring end region (62) and the second ring end region (63) overlap in the radial direction (R) of the sealing region.

7. Piston pump according to one of the preceding claims, **characterized in that** the first ring end region (62) and the second ring end region (63) overlap in the axial direction (X) of the sealing region (6).

8. Piston pump according to one of the preceding claims, **characterized in that** the piston (2) has, on its pressure-chamber-side end, an annular recess (2a) for receiving the sealing region (6) of the retention device (4).

## Revendications

1. Pompe à piston pour refouler un fluide, comportant un piston (2), une chambre de pression (20) disposée entre une soupape d'admission (13) et une soupape d'évacuation (14), la soupape d'admission (13) comportant un élément de fermeture (10), un élément ressort (11) pour le rappel de l'élément de fermeture (10) et un dispositif de retenue (4), le dispositif de retenue (4) comportant une région de réception (5) pour recevoir et supporter l'élément ressort (11) et une région d'étanchéité (6) formée d'un seul tenant, afin de rendre la chambre de pression (20) étanche vis-à-vis d'une région basse pression de la pompe à piston, la région d'étanchéité (6) étant formée en forme de bague, **caractérisée en ce que** le dispositif de retenue (4) est une pièce en matière plastique moulée par injection et la région d'étanchéité (6) comprend un point de séparation (61).

2. Pompe à piston selon la revendication 1, **caractérisée en ce que** la région d'étanchéité (6) du dispositif de retenue (4) comprend des éléments d'espacement (60) sur sa périphérie intérieure.

3. Pompe à piston selon la revendication 2, **caractérisée en ce que** les éléments d'espacement (60) sont des nervures disposées dans la direction axiale (X-X) de la pompe à piston, lesquelles nervures s'appuient contre le piston (2) à l'état monté.

4. Pompe à piston selon l'une quelconque des revendications précédentes, **caractérisée en ce que** la région d'étanchéité (6) est également réalisée sous forme d'élément de guidage du piston.

5. Pompe à piston selon l'une quelconque des revendications précédentes, **caractérisée en ce que** la région d'étanchéité (6) comprend, au niveau du point de séparation (61), une première région d'extrémité de bague (62) et une deuxième région d'extrémité de bague (63), la première et la deuxième région d'extrémité de bague (62,63) se chevauchant dans la direction périphérique (U) de la région d'étanchéité (6).

6. Pompe à piston selon l'une quelconque des revendications précédentes, **caractérisée en ce que** la première région d'extrémité de bague (62) et la deuxième région d'extrémité de bague (63) se chevauchent dans la direction radiale (R) de la région d'étanchéité.

7. Pompe à piston selon l'une quelconque des revendications précédentes, **caractérisée en ce que** la première région d'extrémité de bague (62) et la deuxième région d'extrémité de bague (63) se chevauchent dans la direction axiale (X) de la région d'étanchéité (6).

8. Pompe à piston selon l'une quelconque des revendications précédentes, **caractérisée en ce que** le piston (2) comprend, à son extrémité située du côté de la chambre de pression, un évidement (2a) en forme de bague pour recevoir la région d'étanchéité (6) du dispositif de retenue (4).
